# EUROPEAN PATENT APPLICATION

(11) **EP 3 133 892 A1**
(43) Date of publication of application: **22.02.2017**
(21) Application number: 14889303.5
(22) Date of filing: 17.04.2014
(51) Int. Cl.: H04W 76/02

(54) **METHOD FOR CONTROLLING USER EQUIPMENT ACCESS, AND BASE STATION**

(71) Applicant: Huawei Technologies Co., Ltd., Shenzhen, Guangdong 518129 (CN); Fraunhofer Gesellschaft zur Förderung der angewandten Forschung e.V., 80686 München (DE)
(72) Inventor: DU, Yinggang, Shenzhen Guangdong 518129 (CN); WIRTH, Thomas, 80686 Munich (DE); HOLFELD, Bernd, 80686 Munich (DE); HAUSTEIN, Thomas, 80686 Munich (DE)
(74) Representative: Pfenning, Meinig & Partner mbB
(86) International application number: PCT/CN2014/075567
(87) International publication number: WO 2015/157959

(57) **Abstract**

Embodiments of the present invention provide a user equipment access control method and a base station, where the method includes: determining a use status of a radio resource of a low-transmit-power base station LPN, and providing a service for to-be-accessed user equipment according to the use status of the radio resource of the LPN. According to the present invention, an LPN may actively initiate a user equipment handover, to hand over user equipment served by another base station to the LPN. In an overloaded heterogeneous network, the foregoing technical solutions enable a fast and flexible user equipment handover, and can effectively balance load of a macro eNodeB and an LPN. In addition, the foregoing technical solutions can further effectively reduce signaling overheads, and improve network performance.

## Description

### TECHNICAL FIELD

Embodiments of the present invention relate to the field of communications technologies, and more specifically, to a user equipment access control method and a base station.

### BACKGROUND

To improve network coverage and performance, base stations (for example, a low-transmit-power base station or a transmit/receive node) of different types or standards are deployed in a Homogeneous Network. This network structure is referred to as a heterogeneous network (Heterogeneous Network). A Lower Power Node, LPN, may include a Micro Base Station, a Pico Base Station, a Femto Base Station, and the like. A coverage area of a cell of a high-transmit-power base station (for example, a Macro eNodeB, MeNB) in the heterogeneous network is usually larger than a coverage area of a cell of an LPN. Therefore, a cell of a MeNB may be referred to as a Macro Cell, and a cell of an LPN may be referred to as a Small Cell. The MeNB may be referred to as a master node, and the LPN may be referred to as a slave node.

There may be multiple small cells in a coverage area of a macro cell. Each small cell has a corresponding LPN and a corresponding processing entity. The LPN maintains a Close Subscriber Group, CSG, list. Generally, the LPN provides a service for only user equipment in the CGS list. However, in a Hybrid Access Mode, HAM, the LPN may also provide a service for user equipment that does not belong to the CGS list.

In the prior art, when user equipment that does not belong to a CGS list of an LPN needs to access the LPN, the user equipment sends a request message. A core network device evaluates, according to a load status of the LPN, whether the LPN is allowed to provide a service for the user equipment. The foregoing process needs to involve signaling interworking between base stations and between a base station and a core network device. A large amount of signaling interworking causes deteriorated network performance.

### SUMMARY

Embodiments of the present invention provide a user equipment access control method and a base station, which can reduce signaling overheads, and improve network performance.

According to a first aspect, an embodiment of the present invention provides a user equipment access control method, where the method is executed by a Lower Power Node LPN in the heterogeneous network, and the method includes: determining a use status of a radio resource of the LPN, and providing a service for to-be-accessed user equipment according to the use status of the radio resource of the LPN.

With reference to the first aspect, in a first possible implementation manner, the providing a service for to-be-accessed user equipment according to the use status of the radio resource of the LPN includes: determining, in a case in which the LPN has an idle radio resource, the to-be-accessed user equipment from user equipment that belong to a temporary waiting list TWL, where the user equipment in the TWL does not belong to a closed subscriber group CSG list of the LPN but can access the LPN; and providing a service for the to-be-accessed user equipment.

With reference to the first possible implementation manner, in a second possible implementation manner, the providing a service for to-be-accessed user equipment includes: adding the to-be-accessed user equipment to an allowed list AL, and providing a service for the to-be-accessed user equipment, where the LPN provides a service for user equipment in the AL; and the method further includes: deleting the to-be-accessed user equipment from the TWL.

With reference to the first aspect, in a third possible implementation manner, the to-be-accessed equipment is user equipment that requests to access the LPN and that belongs to a CSG list of the LPN; and
the providing a service for to-be-accessed user equipment according to the use status of the radio resource of the LPN includes: in a case in which it is determined that the LPN has insufficient radio resources to provide a service for the to-be-accessed user equipment, determining to-be-removed user equipment from the user equipment served by the LPN, where the to-be-removed user equipment is user equipment that does not belong to the CSG list of the LPN; stopping providing a service for the to-be-removed user equipment; and providing a service for the to-be-accessed user equipment.

With reference to the third possible implementation manner, in a fourth possible implementation manner, the determining to-be-removed user equipment from the user equipment served by the LPN includes: determining the to-be-removed user equipment from an allowed list AL, where the LPN provides a service for user equipment in the AL; the stopping providing a service for the to-be-removed user equipment includes: deleting the to-be-removed user equipment from the AL; the providing a service for the to-be-accessed user equipment includes: adding the to-be-accessed user equipment to the AL, and providing a service for the to-be-accessed user equipment; and the method further includes: adding the to-be-removed user equipment to a temporary waiting list TWL of the LPN.

With reference to the first possible implementation manner or the second possible implementation manner, in a fifth possible implementation manner, the determining, in a case in which the LPN has an idle radio resource, the to-be-accessed user equipment from user equipment that belong to a temporary waiting list TWL includes: in a case in which the LPN has an idle radio resource, determining the to-be-accessed user equipment according to a preset access standard from the user equipment that belong to the TWL, where the preset access standard includes a proportional fairness rule, a maximum rate criterion, or a service level rule.

With reference to the third possible implementation manner or the fourth possible implementation manner, in a sixth possible implementation manner, the determining the to-be-removed user equipment from an allowed list AL in a case in which it is determined that the LPN has insufficient available radio resources includes: in a case in which it is determined that the LPN has no available radio resource, determining the to-be-removed user equipment according to a preset remove standard from user equipment that is in the AL and does not belong to the CSG list, where the preset remove standard includes a proportional fairness rule, a maximum rate criterion, or a service level rule.

With reference to any one of the second possible implementation manner to the sixth possible implementation manner, in a seventh possible implementation manner, the method further includes: receiving a push message sent by a macro eNodeB, MeNB, in the heterogeneous network, where the push message includes an identifier ID of to-be-pushed user equipment, the to-be-pushed user equipment does not belong to the TWL or the CSG list of the LPN, and the to-be-pushed user equipment can access the LPN; and adding the to-be-pushed user equipment to the TWL.

With reference to any one of the second possible implementation manner to the seventh possible implementation manner, in an eighth possible implementation manner, the method further includes: determining to-be-offloaded user equipment from the user equipment that belong to the TWL; sending an offload message to the macro eNodeB, MeNB, in the heterogeneous network, where the offload message includes an identifier ID of the to-be-offloaded user equipment; and deleting the to-be-offloaded user equipment from the TWL.

With reference to any one of the second possible implementation manner to the ninth possible implementation manner, in a ninth possible implementation manner, the method further includes: deleting user equipment from the TWL according to a clear rule.

According to a second aspect, an embodiment of the present invention provides a user equipment access control method, where the method is executed by a macro eNodeB, MeNB, in a heterogeneous network, and the method includes: determining a target Lower Power Node LPN; and performing an add user equipment operation on a temporary waiting list TWL of the target LPN, or performing a delete user equipment operation on a TWL of the target LPN, where user equipment in the TWL does not belong to a closed subscriber group CSG list of the target LPN but can access the LPN.

With reference to the second aspect, in a first possible implementation manner, the performing an add user equipment operation on a TWL of the target LPN includes: determining to-be-pushed user equipment from a master access list MAL, where the to-be-pushed user equipment can access the target LPN; and sending a push message to the target LPN, where the push message includes an identifier ID of the to-be-pushed user equipment.

With reference to the second aspect, in a second possible implementation manner, the performing a delete user equipment operation on a TWL of the target LPN includes: receiving an offload message sent by the target LPN, where the offload message includes an identifier ID of to-be-offloaded user equipment; and adding the to-be-offloaded user equipment to a master access list MAL.

According to a third aspect, an embodiment of the present invention provides a base station, where the base station includes: a first control unit, configured to determine a use status of a radio resource of the base station; and a second control unit, configured to provide a service for to-be-accessed user equipment according to the use status that is of the radio resource of the base station and is determined by the first control unit.

With reference to the third aspect, in a first possible implementation manner, in a case in which the first control unit determines that the base station has an idle radio resource, the second control unit is specifically configured to: determine the to-be-accessed user equipment from user equipment that belong to a temporary waiting list TWL, where the user equipment in the TWL does not belong to a closed subscriber group CSG list of the base station but can access the base station; and provide a service for the to-be-accessed user equipment.

With reference to the first possible implementation manner, in a second possible implementation manner, the second control unit is specifically configured to: add the to-be-accessed user equipment to an allowed list AL, and provide a service for the to-be-accessed user equipment, where the base station provides a service for user equipment in the AL; and the second control unit is further configured to delete the to-be-accessed user equipment from the TWL.

With reference to the third aspect, in a third possible implementation manner, the to-be-accessed equipment is user equipment that requests to access the base station and that belongs to a CSG list of the base station; and in a case in which the first control unit determines that the base station has insufficient radio resource to provide a service for the to-be-accessed user equipment, the second control unit is specifically configured to: determine to-be-removed user equipment from the user equipment served by the base station, where the to-be-removed user equipment is user equipment that does not belong to the CSG list of the base station; stop providing a service for the to-be-removed user equipment; and provide a service for the to-be-accessed user equipment.

With reference to the third possible implementation manner, in a fourth possible implementation manner, the second control unit is specifically configured to: determine the to-be-removed user equipment from an allowed list AL, where the base station provides a service for user equipment in the AL list; delete the to-be-removed user equipment from the AL; add the to-be-accessed user equipment to the AL; and provide a service for the to-be-accessed user equipment; and the second control unit is further configured to add the to-be-removed user equipment to a temporary waiting list TWL of the base station.

With reference to the first possible implementation manner or the second possible implementation manner, in a fifth possible implementation manner, the second control unit is specifically configured to determine the to-be-accessed user equipment according to a preset access standard from the user equipment that belong to the TWL.

With reference to the third possible implementation manner or the fourth possible implementation manner, in a sixth possible implementation manner, the second control unit is specifically configured to determine the to-be-removed user equipment according to a preset remove standard from user equipment that is in the AL and does not belong to the CSG list.

With reference to any one of the first possible implementation manner to the sixth possible implementation manner, in a seventh possible implementation manner, the base station further includes: a receiving unit, configured to receive a push message sent by a macro eNodeB, MeNB, in a heterogeneous network, where the push message includes an identifier ID of to-be-pushed user equipment, the to-be-pushed user equipment does not belong to the TWL or the CSG list of the base station, and the to-be-pushed user equipment can access the base station, where the second control unit is further configured to add the to-be-pushed user equipment to the TWL.

With reference to any one of the first possible implementation manner to the seventh possible implementation manner, in an eighth possible implementation manner, the second control unit is further configured to determine to-be-offloaded user equipment from the user equipment that belong to the TWL; and the base station further includes: a sending unit, configured to send an offload message to the macro eNodeB, MeNB, in the heterogeneous network, where the offload message includes an identifier ID of the to-be-offloaded user equipment, and the second control unit is further configured to delete the to-be-offloaded user equipment from the TWL.

With reference to any one of the first possible implementation manner to the eighth possible implementation manner, in a ninth possible implementation manner, the second control unit is further configured to delete user equipment from the TWL according to a clear rule.

According to a fourth aspect, an embodiment of the present invention provides a base station, where the base station includes: a first control unit, configured to determine a target Lower Power Node LPN; and a second control unit, configured to: perform an add user equipment operation on a temporary waiting list TWL of the target LPN, or perform a delete user equipment operation on a TWL of the target LPN, where user equipment in the TWL does not belong to a closed subscriber group CSG list of the target LPN but can access the LPN.

With reference to the fourth aspect, in a first possible implementation manner, the second control unit is specifically configured to determine to-be-pushed user equipment from a master access list MAL, where the to-be-pushed user equipment can access the target LPN; and the base station further includes: a sending unit, configured to send a push message to the target LPN, where the push message includes an identifier ID of the to-be-pushed user equipment.

With reference to the fourth aspect, in a second possible implementation manner, the base station further includes: a receiving unit, configured to receive an offload message sent by the target LPN, where the offload message includes an identifier ID of to-be-offloaded user equipment, where the second control unit is specifically configured to add the to-be-offloaded user equipment to a master access list MAL.

In the foregoing technical solutions, an LPN may actively initiate a user equipment handover, to hand over user equipment served by another base station to the LPN. In an overloaded heterogeneous network, the foregoing technical solutions enable a fast and flexible user equipment handover, and can effectively balance load of a macro eNodeB and an LPN. In addition, the foregoing technical solutions can further effectively reduce signaling overheads, and improve network performance.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a user equipment access control method according to an embodiment of the present invention;
FIG. 2 is a schematic flowchart of a user equipment access control method according to an embodiment of the present invention;
FIG. 3 is a schematic diagram of a specific embodiment according to the present invention;
FIG. 4 is a structural block diagram of a base station according to an embodiment of the present invention;
FIG. 5 is a structural block diagram of a base station according to an embodiment of the present invention;
FIG. 6 is a structural block diagram of a base station according to an embodiment of the present invention; and
FIG. 7 is a structural block diagram of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall in the protection scope of the present invention.

It should be understood that, the technical solutions of the embodiments of the present invention may be applied to various communications systems, such as a Global System of Mobile communication ("GSM" for short) System, a Code Division Multiple Access ("CDMA" for short) system, a Wideband Code Division Multiple Access ("WCDMA" for short) system, a General Packet Radio Service ("GPRS" for short), a Long Term Evolution ("LTE" for short) system, an LTE Frequency Division Duplex ("FDD" for short) system, LTE Time Division Duplex ("TDD" for short), and a Universal Mobile Telecommunication System ("UMTS" for short).

User Equipment, UE, also referred to as a Mobile Terminal, MT, mobile user equipment, and the like, may communicate with one or more core networks over a radio access network (for example, Radio Access Network, RAN). The user equipment may be a mobile terminal, such as a mobile phone (or referred to as a "cellular" phone) and a computer with a mobile terminal. For example, the user equipment may be a portable, pocket-sized, handheld, computer built-in, or in-vehicle mobile apparatus.

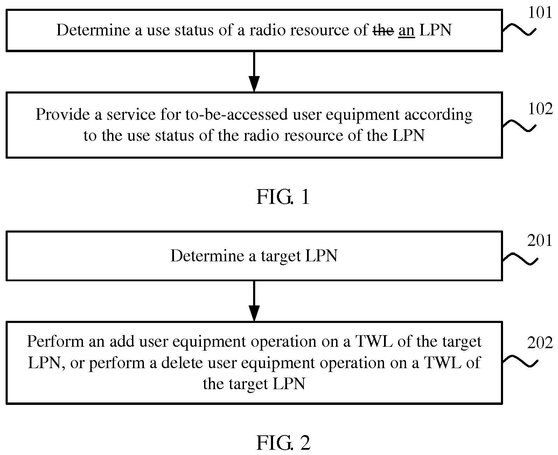

FIG. 1 is a schematic flowchart of a user equipment access control method according to an embodiment of the present invention. The method shown in FIG. 1 is executed by an LPN base station in a heterogeneous network.

101. Determine a use status of a radio resource of the LPN.

102. Provide a service for to-be-accessed user equipment according to the use status of the radio resource of the LPN.

According to the method shown in FIG. 1, the LPN may actively initiate a user equipment handover, to hand over user equipment served by another base station to the LPN. In an overloaded heterogeneous network, the method shown in FIG. 1 enables a fast and flexible user equipment handover, and can effectively balance load of a macro eNodeB and an LPN. In addition, because user equipment does not need to trigger, by using signaling, handover of a base station, the method shown in FIG. 1 can reduce signaling overheads, and effectively avoid that the user equipment exhaustively searches all neighboring cells for an idle resource.

The LPN may select the to-be-accessed user equipment from user equipment that meets a first condition. The user equipment that meets the first condition does not belong to a CSG list of the LPN but can access the LPN (that is, the user equipment is in a coverage area of the LPN). In a case in which there is an idle radio resource, the LPN may provide a service for the to-be-accessed user equipment. The LPN may maintain a Temporary Waiting List, TWL, where the TWL is used to save the user equipment that meets the first condition. The TWL maintained by the LPN may include all user equipment that meet the first condition, or may include some user equipment that meet the first condition. In this case, the providing a service to to-be-accessed user equipment according to the use status of the radio resource of the LPN includes: determining, in a case in which the LPN has an idle radio resource, the to-be-accessed user equipment from user equipment that belong to the TWL, where the user equipment in the TWL does not belong to the closed subscriber group CSG list of the LPN, but the user equipment in the TWL can access the LPN (that is, the user equipment in the TWL is in the coverage area of the LPN); and providing a service for the to-be-accessed user equipment. The LPN may maintain an Allowed List, AL, where the AL is a list of a user served by the LPN. All user equipment served by the LPN belong to the AL. That is, to provide a service for user equipment, the LPN needs to add the user equipment to the AL. In this case, the providing a service for to-be-accessed user equipment includes: adding the to-be-accessed user equipment to the Allowed List, AL, and providing a service for the to-be-accessed user equipment. Further, after adding the to-be-accessed user equipment to the AL, the LPN may delete the to-be-accessed user equipment from the TWL.

Further, the determining, in a case in which the LPN has an idle radio resource, the to-be-accessed user equipment from user equipment that belong to the TWL includes: in a case in which the LPN has an idle radio resource, determining the to-be connected user equipment according to a preset access standard from the user equipment that belong to the TWL. It may be understood that, a radio resource that needs to be occupied by the to-be-accessed user equipment is not greater than the idle radio resource of the LPN.

The preset access standard may be a preset criterion, for example, a proportional fairness rule, a maximum rate criterion, or a service level rule of user equipment. In other words, the to-be-accessed user equipment may be determined according to the proportional fairness rule from the user equipment that belong to the TWL, or the to-be-accessed user equipment may be determined according to the maximum rate criterion from the user equipment that belong to the TWL, or the to-be-accessed user equipment may be determined according to the service level rule of the user equipment that belong to the TWL. The service level rule of the user equipment in the TWL may be determined according to different parameters or metrics. For example, a service level of user equipment may be determined according to a quantity of required radio resources, a waiting time of the user equipment, a delay requirement of the user equipment, even a payment status, or the like. Therefore, once the LPN has an idle radio resource, user equipment with a high service level in the TWL may be added to the AL and access the LPN.

The to-be-accessed user equipment may further be user equipment that requests to access the LPN and that belongs to the CSG list of the LPN. In this case, the providing a service for to-be-accessed user equipment according to the use status of the radio resource of the LPN includes: in a case in which it is determined that the LPN has insufficient radio resources to provide a service for the to-be-accessed user equipment, determining to-be-removed user equipment from the user equipment served by the LPN, where the to-be-removed user equipment is user equipment that does not belong to the CSG list of the LPN; stopping providing a service for the to-be-removed user equipment; and providing a service for the to-be-accessed user equipment. The LPN may maintain an Allowed List, AL. All user equipment served by the LPN belong to the AL. That is, to provide a service for user equipment, the LPN needs to add the user equipment to the AL. To stop providing a service for user equipment, the LPN needs to delete the user equipment from the AL. In this case, the determining to-be-removed user equipment from the user equipment served by the LPN includes: determining the to-be-removed user equipment from the AL, where the LPN provides a service for user equipment in the AL. The stopping providing a service for the to-be-removed user equipment includes: deleting the to-be-removed user equipment from the AL. The providing a service for the to-be-accessed user equipment includes: adding the to-be-accessed user equipment to the AL, and providing a service for the to-be-accessed user equipment. Further, after deleting the to-be-removed user equipment from the AL, the LPN may add the to-be-removed user equipment to the TWL of the LPN.

Further, the determining the to-be-removed user equipment from the AL in a case in which it is determined that the LPN has insufficient radio resources to provide a service for the to-be-accessed user equipment includes: in a case in which it is determined that the LPN has insufficient radio resources to provide a service for the to-be-accessed user equipment, determining the to-be-removed user equipment according to a preset remove standard from user equipment that is in the AL and does not belong to the CSG list. It may be understood that, an available radio resource obtained after the to-be-removed user equipment is removed is not greater than a radio resource occupied by the to-be-accessed user equipment.

The preset remove standard may be a preset criterion, for example, a proportional fairness rule, a maximum rate criterion, or a service level rule of user equipment. In other words, the to-be-removed user equipment may be determined according to the proportional fairness rule from the user equipment that is in the AL and does not belong to the CSG list, or the to-be-removed user equipment may be determined according to the maximum rate criterion from the user equipment that is in the AL and does not belong to the CSG list, or the to-be-removed user equipment may be selected according to the service level rule of the user equipment that is in the AL and does not belong to the CSG list. A service level of user equipment may be determined according to different parameters or metrics. For example, a service level of user equipment may be determined according to a quantity of required radio resources, a waiting time of the user equipment, a delay requirement of the user equipment, even a payment status, or the like. Therefore, once user equipment that belong to the CSG list requests to access the LPN, but the LPN has insufficient available radio resources, the user equipment that is in the AL and does not belong to the CSG list may be removed from the AL list according to a service level. In this way, the LPN can have sufficient idle radio resources, so that the user equipment that requests to access the LPN and belongs to the CSG list can access the LPN.

The TWL saves user equipment Identifier, ID. An ID saved in the TWL may be referred to as a TWL ID. That is, to add user equipment to the TWL, the LPN adds a TWL ID of the user equipment to the TWL. To delete user equipment from the TWL, the LPN needs to delete, from the TWL, a TWL ID corresponding to the to-be-deleted user equipment. Each TWL ID is corresponding to one user equipment. A TWL ID of user equipment may be allocated when the user equipment enters the TWL, and be deleted from the TWL when the user equipment is deleted from the TWL. The TWL ID of the user equipment may also be an identifier of the user equipment.

Further, the LPN may further receive a push message sent by a MeNB in the heterogeneous network, where the push message includes an Identifier, ID, of to-be-pushed user equipment, the to-be-pushed user equipment does not belong to the TWL or the CSG list of the LPN, and the to-be-pushed user equipment can access the LPN. The LPN adds the to-be-pushed user equipment to the TWL. Further, before receiving the push message sent by the MeNB, the LPN determines that the LPN can receive user equipment sent by the MeNB. That is, the LPN needs to negotiate with the MeNB to determine whether the MeNB is allowed to push the user equipment to the TWL of the LPN.

Further, the LPN may further determine to-be-offloaded user equipment from the user equipment that belong to the TWL; send an offload message to the MeNB in the heterogeneous network, where the offload message includes an Identifier, ID, of the to-be-offloaded user equipment; and delete the to-be-offloaded user equipment from the TWL. The LPN may directly determine the to-be-offloaded user equipment. For example, the LPN may determine the to-be-offloaded user equipment according to a service level of the user equipment that belong to the TWL. The LPN may also determine the to-be-offloaded user equipment according to an indication of the MeNB. In other words, the to-be-offloaded user equipment is determined and indicated to the LPN by the MeNB.

Further, the LPN may further delete user equipment from the TWL according to a clear rule. For example, the LPN may collect statistics about a residence time of the user equipment in the TWL, and delete, from the TWL, user equipment whose residence time exceeds a preset time. The LPN may further collect statistics about a throughput requirement of the user equipment in the TWL, and delete, from the TWL, user equipment whose required throughput is greater than a maximum preset limit; or delete, from the TWL, user equipment whose required throughput is less than a minimum preset limit. The clear rule may further be another rule, for example, a fairness rule, a delay requirement rule, or a service level rule of user equipment.

Further, before step 101, the method may further include: receiving a handover request sent by the user equipment that belong to the TWL. In this case, the determining a use status of a radio resource of the LPN includes: in a case in which the handover request sent by the user equipment that belong to the TWL is received, determining the use status of the radio resource of the LPN. In other words, the method shown in FIG. 1 may be triggered by user equipment. Further, in a case in which the LPN receives a handover request sent by user equipment that does not belong to the TWL, the LPN may add the user equipment to the TWL.

FIG. 2 is a schematic flowchart of a user equipment access control method according to an embodiment of the present invention. The method shown in FIG. 2 may be executed by a macro eNodeB in a heterogeneous network.

201. Determine a target LPN.

202. Perform an add user equipment operation on a TWL of the target LPN, or perform a delete user equipment operation on a TWL of the target LPN, where user equipment in the TWL does not belong to a CSG list of the target LPN but can access the LPN.

According to the method shown in FIG. 2, the MeNB can control user equipment in a TWL maintained by an LPN in a service range. Therefore, the MeNB can properly control TWLs maintained by all LPNs in the entire HetNet.

The performing an add user equipment operation on a TWL of the target LPN includes: determining to-be-pushed user equipment from a Master Access List, MAL, where the to-be-pushed user equipment can access the target LPN; and sending a push message to the target LPN, where the push message includes an ID of the to-be-pushed user equipment.

Further, before the performing an add user equipment operation on a TWL of the target LPN, the method may further include: determining that the target LPN allows the add user equipment operation. Specifically, the MeNB may negotiate with the target LPN to determine whether the MeNB is allowed to push user equipment. For example, the MeNB may perform a signaling exchange with the target LPN to determine whether the to-be-pushed user equipment is allowed to be sent to the target LPN.

The performing a delete user equipment operation on a TWL of the target LPN includes: receiving an offload message sent by the target LPN, where the offload message includes an ID of to-be-offloaded user equipment; and adding the to-be-offloaded user equipment to a master access list MAL.

The following describes the present invention with reference to a specific embodiment. It should be noted that, the specific embodiment is merely an example intended to help a person skilled in the art better understand the present invention, instead of limiting the present invention.

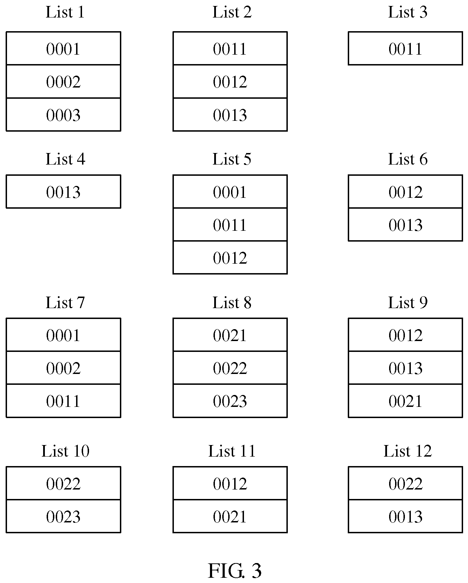

FIG. 3 is a schematic diagram of a specific embodiment according to the present invention.

There are multiple LPNs in a coverage area of a MeNB. A first LPN is any LPN in the multiple LPNs. The first LPN may provide services for only three user equipment at a same moment. The first LPN maintains a CSG list, and the CSG list has three user equipment. The three user equipment are respectively user equipment 01, user equipment 02, and user equipment 03, where an ID of the user equipment 01 is 0001, an ID of the user equipment 02 is 0002, and an ID of the user equipment 03 is 0003. The CSG list is a list 1 shown in FIG. 3. The first LPN further maintains a TWL and an AL. User equipment served by the first LPN is saved in the AL. The AL may save an ID of the user equipment served by the first LPN. In a case in which the first LPN has an idle resource, the first LPN may allow user equipment in the TWL to access the first LPN, where the TWL saves a TWL ID, and the TWL ID may be an ID of user equipment saved in the TWL.

At the first moment, the TWL maintained by the first LPN includes three user equipment. IDs of the three user equipment are respectively 0011, 0012, and 0013, where 0011 is corresponding to user equipment 11, 0012 is corresponding to user equipment 12, and 0013 is corresponding to user equipment 13. The TWL at the first moment is a list 2 shown in FIG. 3. A list 3 in FIG. 3 is an AL list of the first LPN at the first moment. It can be seen from the list 3 that, the AL list has only one user equipment, and an ID of the user equipment is 0011. That is, at the first moment, the first LPN provides a service for only the user equipment 11.

At the first moment, there is only one user equipment accesses the first LPN. Because the first LPN can provide services for three user equipment, and no user equipment in the CSG list requests to access the LPN, the first LPN may select two user equipment from the maintained TWL, and add the two user equipment to the AL. In this way, the first LPN can provide services for three user equipment. It is assumed that in the three user equipment in the TWL, user equipment with a highest service level is the user equipment 11, and user equipment with a lowest service level is the user equipment 13. Then, the first LPN may add two user equipment with a highest service level to the AL. After adding the user equipment (that is, the user equipment 11 and the user equipment 12) with the highest service level to the AL, the LPN may delete the user equipment 11 and the user equipment 12 from the TWL. At the second moment, the TWL has only the user equipment 13. The AL has the user equipment 01, the user equipment 11, and the user equipment 12. The TWL at the second moment is a list 4 shown in FIG. 3, and the AL at the second moment is a list 5 shown in FIG. 3.

In a case in which user equipment saved in the AL includes the user equipment 01, the user equipment 11, and the user equipment 12, the user equipment 02 requests to access the LPN. Because the first LPN can provide services for only three user equipment, the first LPN needs to remove one user equipment from the AL. Because the user equipment 01 in the AL also belongs to the CSG list, the first LPN needs to select a to-be-removed user equipment from the user equipment that does not belong to the CSG list (that is, user equipment whose IDs are 0011 and 0012), and removes the to-be-removed user equipment from the AL. A method for selecting user equipment by the first LPN may be randomly selected, or may be selected according to a service level of user equipment. If the method for selecting the to-be-removed user equipment is selected according to a service level of user equipment, the LPN may remove the user equipment 12 from the AL. Then, the first LPN may add the user equipment 02 to the AL. At the third moment, the first LPN provides services for the user equipment 01, the user equipment 02, and the user equipment 11. That is, user equipment in the AL includes the user equipment 01, the user equipment 02, and the user equipment 11. The first LPN may further pull removed user equipment back to the TWL. In this case, user equipment in the TWL are the user equipment 12 and the user equipment 13. The TWL at the third moment is a list 6 shown in FIG. 3, and the AL at the third moment is a list 7 shown in FIG. 3.

A list 8 in FIG. 3 is an MAL maintained by a MeNB in a HetNet to which the first LPN belongs. User equipment included in the MAL may be user equipment 21, user equipment 22, and user equipment 23. The MAL may save an ID of user equipment, where an ID of the user equipment 21 is 0021, an ID of the user equipment 22 is 0022, and an ID of the user equipment 23 is 0023. The MeNB may further push user equipment in the MAL to the TWL of the first LPN. It is assumed that this push process occurs at the fourth moment after the third moment. When selecting to-be-pushed user equipment, the MeNB may select any user equipment from the user equipment in the MAL, may select the to-be-pushed user equipment according to a service level of the user equipment in the MAL. It is assumed that the to-be-pushed user equipment selected by the MeNB is the user equipment 21, and the first LPN may receive the user equipment pushed by the MeNB. Then, at the fourth moment, user equipment in the TWL are the user equipment 12, the user equipment 13, and the user equipment 21, and user equipment in the MAL are the user equipment 22 and the user equipment 23. The TWL at the fourth moment is a list 9 shown in FIG. 3, and the MAL at the fourth moment is a list 10 shown in FIG. 3.

After the fourth moment, the first LPN may further push user equipment in the TWL back to the MeNB. A method for selecting, by the first LPN, to-be-offloaded user equipment that needs to be returned to the MAL may be selected according to a service level of user equipment. The first LPN selects N user equipment with a lowest service level or user equipment whose service level is lower than a preset level as the to-be-offloaded user equipment. For example, the first LPN may select one user equipment with a lowest service level from the TWL as the to-be-offloaded user equipment. It is assumed that at this moment, the user equipment with a lowest service level in the TWL is the user equipment 13. Then, the first LPN may offload the user equipment 13, and delete the ID of the user equipment 13 from the TWL. The MeNB may add the user equipment 13 to the MAL. At the fifth moment, the TWL includes the user equipment 12 and the user equipment 21, and the MAL includes the user equipment 22, the user equipment 23, and the user equipment 13. The TWL at the fifth moment is a list 11 shown in FIG. 3, and the MAL at the fifth moment is a list 12 shown in FIG. 3.

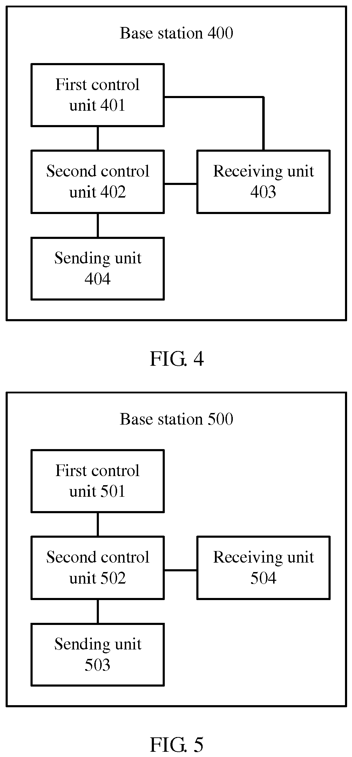

FIG. 4 is a structural block diagram of a base station according to an embodiment of the present invention. The base station shown in FIG. 4 is an LPN in a HetNet. The base station shown in FIG. 4 can execute all steps executed by the LPN in FIG. 1 and FIG. 3. As shown in FIG. 4, a base station 400 includes a first control unit 401 and a second control unit 402.

The first control unit 401 is configured to determine a use status of a radio resource of the base station 400.

The second control unit 402 is configured to provide a service for to-be-accessed user equipment according to the use status that is of the radio resource of the base station 400 and is determined by the first control unit 401.

The base station 400 shown in FIG. 4 may actively initiate a user equipment handover, to hand over user equipment served by another base station to the base station 400. In an overloaded heterogeneous network, the base station 400 shown in FIG. 4 enables a fast and flexible user equipment handover, and can effectively balance load of a macro base station and an LPN. In addition, because user equipment does not need to trigger, by using signaling, a handover performed by a base station, the base station 400 shown in FIG. 4 can reduce signaling overheads, and effectively avoid that the user equipment exhaustively searches all neighboring cells for an idle resource.

The second control unit 402 may select the to-be-accessed user equipment from user equipment that meets a first condition. The user equipment that meets the first condition does not belong to a CSG list of the base station 400 but can access the base station 400 (that is, the user equipment is in a coverage area of the base station 400). In a case in which there is an idle radio resource, the second control unit 402 may provide a service for the to-be-accessed user equipment. The second control unit 402 may maintain a Temporary Waiting List, TWL, where the TWL is used to save the user equipment that meets the first condition. The TWL maintained by the LPN may include all user equipment that meet the first condition, or may include some user equipment that meet the first condition. In this case, the to-be-accessed equipment may be user equipment that belong to the TWL. Specifically, in a case in which the first control unit 401 determines that the base station 400 has an idle radio resource, the second control unit 402 is specifically configured to: determine the to-be-accessed user equipment from user equipment that belong to the TWL, where the user equipment in the TWL does not belong to the CSG list of the base station 400 but can access the base station 400; and provide a service for the to-be-accessed user equipment. The second control unit 402 may maintain an Allowed List, AL. All user equipment served by the base station 400 belong to the AL. That is, to provide a service for user equipment, the base station 400 needs to add the user equipment to the AL. In this case, the second control unit 402 is specifically configured to add the to-be-accessed user equipment to the Allowed List, AL, and provide a service for the to-be-accessed user equipment. Further, after adding the to-be-accessed user equipment to the AL, the second control unit 402 may delete the to-be-accessed user equipment from the TWL.

The second control unit 402 is specifically configured to determine the to-be-accessed user equipment according to a preset access standard from the user equipment that belong to the TWL.

The preset access standard may be a preset criterion, for example, a proportional fairness rule, a maximum rate criterion, or a service level rule of user equipment. In other words, the second control unit 402 may determine the to-be-accessed user equipment according to the proportional fairness rule from the user equipment that belong to the TWL, or the second control unit 402 may determine the to-be-accessed user equipment according to the maximum rate criterion from the user equipment that belong to the TWL, or the second control unit 402 may determine the to-be-accessed user equipment according to the service level rule of the user equipment in the TWL. The service level rule of the user equipment in the TWL may be determined according to different parameters or metrics. For example, a service level of user equipment may be determined according to a quantity of required radio resources, a waiting time of the user equipment, a delay requirement of the user equipment, even a payment status, or the like. Therefore, once the base station 400 has an idle radio resource, user equipment with a high service level in the TWL may be added to the AL and access the base station 400.

The to-be-accessed equipment may further be user equipment that requests to access the base station 400 and that belongs to the CSG list of the base station 400. Specifically, in a case in which the first control unit 401 determines that the base station 400 has insufficient radio resources to provide a service for the to-be-accessed user equipment, the second control unit 402 is specifically configured to: determine to-be-removed user equipment from the user equipment served by the base station 400, where the to-be-removed user equipment is user equipment that does not belong to the CSG list of the base station 400; stop providing a service for the to-be-removed user equipment; and provide a service for the to-be-accessed user equipment. The second control unit 402 may maintain an Allowed List, AL. All user equipment served by the base station 400 belong to the AL. That is, to provide a service for user equipment, the base station 400 needs to add the user equipment to the AL. To stop providing a service for user equipment, the base station 400 needs to delete the user equipment from the AL. In this case, the second control unit 402 is specifically configured to: determine the to-be-removed user equipment from the AL, where the LPN provides a service for user equipment in the AL; delete the to-be-removed user equipment from the AL; add the to-be-accessed user equipment to the AL; and provide a service for the to-be-accessed user equipment. Further, after deleting the to-be-removed user equipment from the AL, the second control unit 402 may add the to-be-removed user equipment to the TWL of the LPN.

The second control unit 402 is specifically configured to determine the to-be-removed user equipment according to a preset remove standard from user equipment that is in the AL and does not belong to the CSG list.

The preset remove standard may be a preset criterion, for example, a proportional fairness rule, a maximum rate criterion, or a service level rule of user equipment. In other words, the second control unit 402 may determine the to-be-removed user equipment according to the proportional fairness rule from the user equipment that is in the AL and does not belong to the CSG list, or the second control unit 402 may determine the to-be-removed user equipment according to the maximum rate criterion from the user equipment that is in the AL and does not belong to the CSG list, or the second control unit 402 may select the to-be-removed user equipment according to a service level rule of the user equipment that is in the AL and does not belong to the CSG list. A service level of user equipment may be determined according to different parameters or metrics. For example, a service level of user equipment may be determined according to a quantity of required radio resources, a waiting time of the user equipment, a delay requirement of the user equipment, even a payment status, or the like. Therefore, once user equipment that belong to the CSG list requests to access the base station 400, but the base station 400 has insufficient available radio resources, the user equipment that is in the AL and does not belong to the CSG list may be removed from the AL list according to a service level. In this way, the base station 400 can have sufficient idle radio resources, so that the user equipment that requests to access the base station 400 and belongs to the CSG list can access the base station 400.

Further, the base station 400 may further include a receiving unit 403. The receiving unit 403 is configured to receive a push message sent by a MeNB in the HetNet, where the push message includes an identifier ID of to-be-pushed user equipment, the to-be-pushed user equipment does not belong to the TWL or the CSG list of the base station 400, and the to-be-pushed user equipment can access the base station 400. The second control unit 402 is configured to add the to-be-pushed user equipment to the TWL. The second control unit 402 may be further configured to receive user equipment pushed by the MeNB.

Further, the base station 400 may further include a sending unit 404. The second control unit 402 may be further configured to determine to-be-offloaded user equipment from the user equipment that belong to the TWL. The sending unit 404 is configured to send an offload message to the MeNB in the HetNet, where the offload message includes an identifier ID of the to-be-offloaded user equipment. The second control unit 402 is further configured to delete the to-be-offloaded user equipment from the TWL. The second control unit 402 may directly determine the to-be-offloaded user equipment. For example, the second control unit 402 may determine the to-be-offloaded user equipment according to a service level of the user equipment that belong to the TWL. The second control unit 402 may also determine the to-be-offloaded user equipment according to an indication of the MeNB. In other words, the to-be-offloaded user equipment is determined and indicated to the base station 400 by the MeNB.

Further, the second control unit 402 may be further configured to delete specific user equipment from the TWL according to a clear rule. For example, the second control unit 402 may collect statistics about a residence time of the user equipment in the TWL, and delete, from the TWL, user equipment whose residence time exceeds a preset time. The second control unit 402 may further collect statistics about a throughput requirement of the user equipment in the TWL, and delete, from the TWL, user equipment whose required throughput is greater than a maximum preset limit; or the second control unit 402 may delete, from the TWL, user equipment whose required throughput is less than a minimum preset limit. The clear rule may further be another rule, for example, a fairness rule, a delay requirement rule, or a service level of user equipment.

Further, the receiving unit 403 may be further configured to receive a handover request sent by the user equipment that belong to the TWL. The first control unit 401 is specifically configured to: in a case in which the receiving unit 403 receives the handover request sent by the user equipment that belong to the TWL, determine the use status of the radio resource of the base station 400. Further, in a case in which the receiving unit 403 receives a handover request sent by user equipment that does not belong to the TWL, the second control unit 402 may add the user equipment to the TWL.

FIG. 5 is a structural block diagram of a base station according to an embodiment of the present invention. The base station shown in FIG. 5 is a MeNB in a HetNet. The base station shown in FIG. 5 can execute all steps executed by the MeNB in FIG. 2 and FIG. 3. As shown in FIG. 5, a base station 500 includes a first control unit 501 and a second control unit 502.

The first control unit 501 is configured to determine a target LPN.

The second control unit 502 is configured to: perform an add user equipment operation on a TWL of the target LPN, or perform a delete user equipment operation on a TWL of the target LPN, where user equipment in the TWL does not belong to a closed subscriber group CSG list of the target LPN but can access the LPN.

The base station 500 shown in FIG. 5 can control user equipment in a TWL maintained by an LPN in a service range. Therefore, the base station 500 can properly control TWLs maintained by all LPNs in the entire HetNet.

The second control unit 502 is specifically configured to determine to-be-pushed user equipment from an MAL, where the to-be-pushed user equipment can access the target LPN.

The base station 500 may further include a sending unit 503.

The sending unit 503 is configured to send a push message to the target LPN, where the push message includes an identifier ID of the to-be-pushed user equipment determined by the second control unit 502.

Further, the second control unit 502 may be further configured to determine that the target LPN allows the add user equipment operation.

A receiving unit 504 may be further configured to receive an offload message sent by the target LPN, where the offload message includes an identifier ID of to-be-offloaded user equipment.

The second control unit 502 is specifically configured to add, to the MAL, the to-be-offloaded user equipment included in the offload message received by the receiving unit 504.

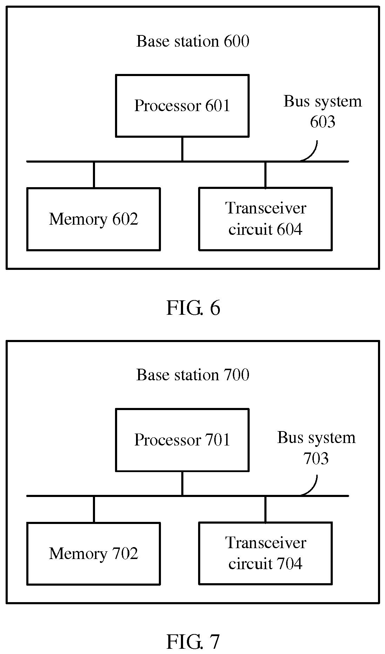

FIG. 6 is a structural block diagram of a base station according to an embodiment of the present invention. The base station shown in FIG. 6 is an LPN in a HetNet. The base station shown in FIG. 6 can execute all steps executed by the LPN in FIG. 1 and FIG. 3. A base station 600 shown in FIG. 6 includes a processor 601 and a memory 602.

All components in the base station 600 are coupled together by using a bus system 603. In addition to a data bus, the bus system 603 further includes a power bus, a control bus, and a status signal bus. However, for clarity of description, various buses are marked as the bus system 603 in FIG. 6.

The method disclosed in the foregoing embodiment of the present invention may be applied to the processor 601, or be implemented by the processor 601. The processor 601 may be an integrated circuit chip and has a signal processing capability. In an implementation process, the steps in the foregoing method may be completed by using an integrated logic circuit of hardware in the processor 601 or an instruction in a form of software. The foregoing processor 601 may be a general purpose processor, a Digital Signal Processor, DSP, an Application Specific Integrated Circuit, ASIC, a field programmable gate array Field Programmable Gate Array, FPGA, or another programmable logic device, a discrete gate or transistor logic device, or a discrete hardware assembly, which may implement or perform the methods, the steps, and logical block diagrams that are disclosed in the embodiments of the present invention. The general purpose processor may be a microprocessor, or may be any conventional processor, or the like. The steps of the methods disclosed with reference to the embodiments of the present invention may be directly performed and completed by a hardware decoding processor, or performed and completed by a combination of hardware and software modules in a decoding processor. The software module may be located in a mature storage medium in the art, such as a Random Access Memory, RAM, a flash memory, a Read-Only Memory, ROM, a programmable read-only memory, an electrically erasable programmable memory, or a register. The storage medium is located in the memory 602. The processor 601 reads an instruction from the memory 602, and completes the steps of the foregoing method in combination with the hardware.

The processor 601 is configured to determine a use status of a radio resource of the LPN.

The processor 601 is further configured to provide a service for to-be-accessed user equipment according to the use status that is of the radio resource of the LPN and is determined by the processor 601.

The base station 600 shown in FIG. 6 may actively initiate a user equipment handover, to hand over user equipment served by another base station to the base station 600. In an overloaded heterogeneous network, the base station 600 shown in FIG. 6 enables a fast and flexible user equipment handover, and can effectively balance load of a macro base station and an LPN. In addition, because user equipment does not need to trigger, by using signaling, a handover performed by a base station, the base station 600 shown in FIG. 6 can reduce signaling overheads, and effectively avoid that the user equipment exhaustively searches all neighboring cells for an idle resource.

The processor 601 may select the to-be-accessed user equipment from user equipment that meets a first condition. The user equipment that meets the first condition does not belong to a CSG list of the base station 600 but can access the base station 600 (that is, the user equipment is in a coverage area of the base station 600). In a case in which there is an idle radio resource, a second control unit 602 may provide a service for the to-be-accessed user equipment. The second control unit 602 may maintain a Temporary Waiting List, TWL, where the TWL is used to save the user equipment that meets the first condition. The TWL maintained by the LPN may include all user equipment that meet the first condition, or may include some user equipment that meet the first condition. In this case, the to-be-accessed equipment may be user equipment that belong to the TWL. Specifically, in a case in which it is determined that the base station 600 has an idle radio resource, the processor 601 is specifically configured to: determine the to-be-accessed user equipment from user equipment that belong to the TWL, where the user equipment in the TWL does not belong to the CSG list of the base station 600 but can access the base station 600; and provide a service for the to-be-accessed user equipment. The processor 601 may maintain an Allowed List, AL. All user equipment served by the base station 600 belong to the AL. That is, to provide a service for user equipment, the base station 600 needs to add the user equipment to the AL. In this case, the processor 601 is specifically configured to add the to-be-accessed user equipment to the Allowed List, AL, and provide a service for the to-be-accessed user equipment. Further, after adding the to-be-accessed user equipment to the AL, the processor 601 may delete the to-be-accessed user equipment from the TWL.

The processor 601 is specifically configured to determine the to-be-accessed user equipment according to a preset access standard from the user equipment that belong to the TWL.

The preset access standard may be a preset criterion, for example, a proportional fairness rule, a maximum rate criterion, or a service level rule of user equipment. In other words, the processor 601 may determine the to-be-accessed user equipment according to the proportional fairness rule from the user equipment that belong to the TWL, or the processor 601 may determine the to-be-accessed user equipment according to the maximum rate criterion from the user equipment that belong to the TWL, or the processor 601 may determine the to-be-accessed user equipment according to the service level rule of the user equipment in the TWL. The service level rule of the user equipment in the TWL may be determined according to different parameters or metrics. For example, a service level of user equipment may be determined according to a quantity of required radio resources, a waiting time of the user equipment, a delay requirement of the user equipment, even a payment status, or the like. Therefore, once the base station 600 has an idle radio resource, user equipment with a high service level in the TWL can be added to the AL and access the base station 600.

The to-be-accessed equipment may further be user equipment that requests to access the base station 600 and that belongs to the CSG list of the base station 600. Specifically, in a case in which it is determined that the base station 600 has insufficient radio resources to provide a service for the to-be-accessed user equipment, the processor 601 is specifically configured to: determine to-be-removed user equipment from the user equipment served by the base station 600, where the to-be-removed user equipment is user equipment that does not belong to the CSG list of the base station 600; stop providing a service for the to-be-removed user equipment; and provide a service for the to-be-accessed user equipment. The processor 601 may maintain an Allowed List, AL. All user equipment served by the base station 600 belong to the AL. That is, to provide a service for user equipment, the base station 600 needs to add the user equipment to the AL. To stop providing a service for user equipment, the base station 600 needs to delete the user equipment from the AL. In this case, the processor 601 is specifically configured to: determine the to-be-removed user equipment from the AL, where the LPN provides a service for user equipment in the AL; delete the to-be-removed user equipment from the AL; add the to-be-accessed user equipment to the AL; and provide a service for the to-be-accessed user equipment. Further, after deleting the to-be-removed user equipment from the AL, the processor 601 may add the to-be-removed user equipment to the TWL of the LPN.

The processor 601 is specifically configured to determine the to-be-removed user equipment according to a preset remove standard from user equipment that is in the AL and does not belong to the CSG list.

The preset remove standard may be a preset criterion, for example, a proportional fairness rule, a maximum rate criterion, or a service level rule of user equipment. In other words, the processor 601 may determine the to-be-removed user equipment according to the proportional fairness rule from the user equipment that is in the AL and does not belong to the CSG list, or the processor 601 may determine the to-be-removed user equipment according to the maximum rate criterion from the user equipment that is in the AL and does not belong to the CSG list, or the processor 601 may select the to-be-removed user equipment according to a service level rule of the user equipment that is in the AL and does not belong to the CSG list. A service level of user equipment may be determined according to different parameters or metrics. For example, a service level of user equipment may be determined according to a quantity of required radio resources, a waiting time of the user equipment, a delay requirement of the user equipment, a payment status, or the like. Therefore, once user equipment that belong to the CSG list requests to access the base station 600, but the base station 600 has insufficient available radio resources, the user equipment that is in the AL and does not belong to the CSG list may be removed from the AL list according to a service level. In this way, the base station 600 can have sufficient idle radio resources, so that the user equipment that requests to access the LPN and belongs to the CSG list can access the base station 600.

Further, the base station 600 may further include a transceiver circuit 604.

The transceiver circuit 604 is configured to receive a push message sent by a MeNB in the HetNet, where the push message includes an identifier ID of to-be-pushed user equipment, the to-be-pushed user equipment does not belong to the TWL or the CSG list of the LPN, and the to-be-pushed user equipment can access the LPN. The processor 601 is configured to add the to-be-pushed user equipment to the TWL. The processor 601 may be further configured to receive user equipment pushed by the MeNB.

The processor 601 is configured to determine to-be-offloaded user equipment from the user equipment that belong to the TWL. The transceiver circuit 604 is configured to send an offload message to the MeNB in the HetNet, where the offload message includes an identifier ID of the to-be-offloaded user equipment. The processor 601 is further configured to delete the to-be-offloaded user equipment from the TWL. The processor 601 may directly determine the to-be-offloaded user equipment. For example, the processor 601 may determine the to-be-offloaded user equipment according to a service level of the user equipment that belong to the TWL. The processor 601 may also determine the to-be-offloaded user equipment according to an indication of the MeNB. In other words, the to-be-offloaded user equipment is determined and indicated to the base station 600 by the MeNB.

The processor 601 may be further configured to delete specific user equipment from the TWL according to a clear rule. For example, the processor 601 may collect statistics about a residence time of the user equipment in the TWL, and delete, from the TWL, user equipment whose residence time exceeds a preset time. The processor 601 may further collect statistics about a throughput requirement of the user equipment in the TWL, and delete, from the TWL, user equipment whose required throughput is greater than a maximum preset limit; or the processor 601 may delete, from the TWL, user equipment whose required throughput is less than a minimum preset limit. The clear rule may further be another rule, for example, a fairness rule, a delay requirement rule, or a payment status.

The transceiver circuit 604 may be further configured to receive a handover request sent by the user equipment that belong to the TWL. The processor 601 is specifically configured to: in a case in which the transceiver circuit 604 receives the handover request sent by the user equipment that belong to the TWL, determine the use status of the radio resource of the LPN. Further, in a case in which the transceiver circuit 604 receives a handover request sent by user equipment that does not belong to the TWL, the processor 601 may add the user equipment to the TWL.

FIG. 7 is a structural block diagram of a base station according to an embodiment of the present invention. The base station shown in FIG. 7 is a MeNB in a HetNet. The base station shown in FIG. 7 can execute all steps executed by the MeNB in FIG. 2 and FIG. 3. A base station 700 shown in FIG. 7 includes a processor 701 and a memory 702.

All components in the base station 700 are coupled together by using a bus system 703. In addition to a data bus, the bus system 703 further includes a power bus, a control bus, and a status signal bus. However, for clarity of description, various buses are marked as the bus system 703 in FIG. 7.

The method disclosed in the foregoing embodiment of the present invention may be applied to the processor 701, or be implemented by the processor 701. The processor 701 may be an integrated circuit chip and has a signal processing capability. In an implementation process, the steps in the foregoing methods may be completed by using an integrated logic circuit of hardware in the processor 701 or an instruction in a form of software. The foregoing processor 701 may be a general purpose processor, a Digital Signal Processor, DSP, an Application Specific Integrated Circuit, ASIC, a Field Programmable Gate Array, FPGA, or another programmable logic device, a discrete gate or transistor logic device, or a discrete hardware assembly, which may implement or perform the methods, the steps, and logical block diagrams that are disclosed in the embodiments of the present invention. The general purpose processor may be a microprocessor, or may be any conventional processor, or the like. The steps of the methods disclosed with reference to the embodiments of the present invention may be directly performed and completed by a hardware decoding processor, or performed and completed by a combination of hardware and software modules in a decoding processor. The software module may be located in a mature storage medium in the art, such as a Random Access Memory, RAM, a flash memory, a Read-Only Memory, ROM, a programmable read-only memory, an electrically erasable programmable memory, or a register. The storage medium is located in the memory 702. The processor 701 reads an instruction from the memory 702, and completes the steps of the foregoing method in combination with the hardware.

The processor 701 is configured to determine a target LPN.

The processor 701 is further configured to: perform an add user equipment operation on a TWL of the target LPN, or perform a delete user equipment operation on a TWL of the target LPN, where user equipment in the TWL does not belong to a closed subscriber group CSG list of the target LPN but can access the LPN.

The base station 700 shown in FIG. 7 can control user equipment in a TWL maintained by an LPN in a service range. Therefore, the base station 700 may properly control TWLs maintained by all LPNs in the entire HetNet.

The processor 701 is specifically configured to determine to-be-pushed user equipment from an MAL, where the to-be-pushed user equipment can access the target LPN.

The base station 700 may further include a transceiver circuit 704.

The transceiver circuit 704 is configured to send a push message to the target LPN, where the push message includes an identifier ID of the to-be-pushed user equipment determined by the processor 701.

Further, the processor 701 may be further configured to determine that the target LPN allows the add user equipment operation.

The transceiver circuit 704 is further configured to receive an offload message sent by the target LPN, where the offload message includes an identifier ID of to-be-offloaded user equipment.

The processor 701 is specifically configured to add, to the MAL, the to-be-offloaded user equipment included in the offload message received by the receiving unit 501.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a Read-Only Memory, ROM, a Random Access Memory, RAM, a magnetic disk, or an optical disc.

The foregoing descriptions are merely specific embodiments of the present invention, but are not intended to limit the protection scope of the present invention. Any variation or replacement readily figured out by a person skilled in the art in the technical scope disclosed in the present invention shall fall in the protection scope of the present invention. Therefore, the protection scope of the present invention shall be subject to the protection scope of the claims.

## Claims

1. A user equipment access control method, wherein the method is executed by a , Lower Power Node, LPN in the heterogeneous network, and the method comprises:
determining a use status of a radio resource of the LPN; and
providing a service for to-be-accessed user equipment according to the use status of the radio resource of the LPN.

2. The method according to claim 1, wherein the providing a service for to-be-accessed user equipment according to the use status of the radio resource of the LPN comprises:
determining, in a case in which the LPN has an idle radio resource, the to-be-accessed user equipment from user equipment that belong to a, temporary waiting list, TWL, wherein the user equipment in the TWL does not belong to a closed subscriber group CSG list of the LPN but can access the LPN; and
providing a service for the to-be-accessed user equipment.

3. The method according to claim 2, wherein the providing a service for to-be-accessed user equipment comprises:
adding the to-be-accessed user equipment to an, allowed list, AL, and providing a service for the to-be-accessed user equipment, wherein the LPN provides a service for user equipment in the AL; and
the method further comprises:
deleting the to-be-accessed user equipment from the TWL.

4. The method according to claim 1, wherein the to-be-accessed equipment is user equipment that requests to access the LPN and that belongs to a CSG list of the LPN; and
the providing a service for to-be-accessed user equipment according to the use status of the radio resource of the LPN comprises:
in a case in which it is determined that the LPN has insufficient radio resources to provide a service for the to-be-accessed user equipment, determining to-be-removed user equipment from user equipment served by the LPN, wherein the to-be-removed user equipment is user equipment that does not belong to the CSG list of the LPN;
stopping providing a service for the to-be-removed user equipment; and
providing a service for the to-be-accessed user equipment.

5. The method according to claim 4, wherein the determining to-be-removed user equipment from the user equipment served by the LPN comprises:
determining the to-be-removed user equipment from an allowed list AL, wherein the LPN provides a service for user equipment in the AL;
the stopping providing a service for the to-be-removed user equipment comprises:
deleting the to-be-removed user equipment from the AL;
the providing a service for the to-be-accessed user equipment comprises:
adding the to-be-accessed user equipment to the AL, and providing a service for the to-be-accessed user equipment; and
the method further comprises: adding the to-be-removed user equipment to a temporary waiting list TWL of the LPN.

6. The method according to claim 2 or 3, wherein the determining, in a case in which the LPN has an idle radio resource, the to-be-accessed user equipment from user equipment that belong to a temporary waiting list TWL comprises:
in a case in which the LPN has an idle radio resource, determining the to-be-accessed user equipment according to a preset access standard from the user equipment that belong to the TWL, wherein the preset access standard comprises a proportional fairness rule, a maximum rate criterion, or a service level rule.

7. The method according to claim 4 or 5, wherein the determining the to-be-removed user equipment from an allowed list AL in a case in which it is determined that the LPN has insufficient available radio resources comprises:
in a case in which it is determined that the LPN has no available radio resource, determining the to-be-removed user equipment according to a preset remove standard from user equipment that is in the AL and does not belong to the CSG list, wherein the preset remove standard comprises a proportional fairness rule, a maximum rate criterion, or a service level rule.

8. The method according to any one of claims 2 to 7, wherein the method further comprises:
receiving a push message sent by a macro eNodeB, MeNB, in the heterogeneous network, wherein the push message comprises an identifier ID of to-be-pushed user equipment, the to-be-pushed user equipment does not belong to the TWL or the CSG list of the LPN, and the to-be-pushed user equipment can access the LPN; and
adding the to-be-pushed user equipment to the TWL.

9. The method according to any one of claims 2 to 8, wherein the method further comprises:
determining to-be-offloaded user equipment from the user equipment that belong to the TWL;
sending an offload message to the macro eNodeB, MeNB, in the heterogeneous network, wherein the offload message comprises an identifier ID of the to-be-offloaded user equipment; and
deleting the to-be-offloaded user equipment from the TWL.

10. The method according to any one of claims 2 to 9, wherein the method further comprises:
deleting user equipment from the TWL according to a clear rule.

11. A user equipment access control method, wherein the method is executed by a macro eNodeB, MeNB, in a heterogeneous network, and the method comprises:
determining a target Lower Power LPN; and
performing an add user equipment operation on a temporary waiting list TWL of the target LPN, or performing a delete user equipment operation on a TWL of the target LPN, wherein user equipment in the TWL does not belong to a closed subscriber group CSG list of the target LPN but can access the LPN.

12. The method according to claim 11, wherein the performing an add user equipment operation on a TWL of the target LPN comprises:
determining to-be-pushed user equipment from a master access list MAL, wherein the to-be-pushed user equipment can access the target LPN; and
sending a push message to the target LPN, wherein the push message comprises an identifier ID of the to-be-pushed user equipment.

13. The method according to claim 11, wherein the performing a delete user equipment operation on a TWL of the target LPN comprises:
receiving an offload message sent by the target LPN, wherein the offload message comprises an identifier ID of to-be-offloaded user equipment; and
adding the to-be-offloaded user equipment to a master access list MAL.

14. A base station, wherein the base station comprises:
a first control unit, configured to determine a use status of a radio resource of the base station; and
a second control unit, configured to provide a service for to-be-accessed user equipment according to the use status that is of the radio resource of the base station and is determined by the first control unit.

15. The base station according to claim 14, wherein in a case in which the first control unit determines that the base station has an idle radio resource, the second control unit is specifically configured to: determine the to-be-accessed user equipment from user equipment that belong to a temporary waiting list TWL, wherein the user equipment in the TWL does not belong to a closed subscriber group CSG list of the base station but can access the base station; and provide a service for the to-be-accessed user equipment.

16. The base station according to claim 15, wherein the second control unit is specifically configured to: add the to-be-accessed user equipment to an allowed list AL, and provide a service for the to-be-accessed user equipment, wherein the base station provides a service for user equipment in the AL; and
the second control unit is further configured to delete the to-be-accessed user equipment from the TWL.

17. The base station according to claim 14, wherein the to-be-accessed equipment is user equipment that requests to access the base station and that belongs to a CSG list of the base station; and
in a case in which the first control unit determines that the base station has insufficient radio resources to provide a service for the to-be-accessed user equipment, the second control unit is specifically configured to: determine to-be-removed user equipment from the user equipment served by the base station, wherein the to-be-removed user equipment is user equipment that does not belong to the CSG list of the base station; stop providing a service for the to-be-removed user equipment; and provide a service for the to-be-accessed user equipment.

18. The base station according to claim 17, wherein the second control unit is specifically configured to: determine the to-be-removed user equipment from an allowed list AL, wherein the base station provides a service for user equipment in the AL list; delete the to-be-removed user equipment from the AL; add the to-be-accessed user equipment to the AL; and provide a service for the to-be-accessed user equipment; and
the second control unit is further configured to add the to-be-removed user equipment to a temporary waiting list TWL of the base station.

19. The base station according to claim 15 or 16, wherein the second control unit is specifically configured to determine the to-be-accessed user equipment according to a preset access standard from the user equipment that belong to the TWL.

20. The base station according to claim 17 or 18, wherein the second control unit is specifically configured to determine the to-be-removed user equipment according to a preset remove standard from user equipment that is in the AL and does not belong to the CSG list.

21. The base station according to any one of claims 15 to 20, wherein the base station further comprises:
a receiving unit, configured to receive a push message sent by the macro eNodeB, MeNB, in the heterogeneous network, wherein the push message comprises an identifier ID of to-be-pushed user equipment, the to-be-pushed user equipment does not belong to the TWL or the CSG list of the base station, and the to-be-pushed user equipment can access the base station; wherein
the second control unit is further configured to add the to-be-pushed user equipment to the TWL.

22. The base station according to any one of claims 15 to 21, wherein:
the second control unit is further configured to determine to-be-offloaded user equipment from the user equipment that belong to the TWL;
the base station further comprises:
a sending unit, configured to send an offload message to the macro eNodeB, MeNB, in the heterogeneous network, wherein the offload message comprises an identifier ID of the to-be-offloaded user equipment; and
the second control unit is further configured to delete the to-be-offloaded user equipment from the TWL.

23. The base station according to any one of claims 15 to 22, wherein:
the second control unit is further configured to delete user equipment from the TWL according to a clear rule.

24. A base station, wherein the base station comprises:
a first control unit, configured to determine a target Lower Power Node LPN; and
a second control unit, configured to: perform an add user equipment operation on a temporary waiting list TWL of the target LPN, or perform a delete user equipment operation on a TWL of the target LPN, wherein user equipment in the TWL does not belong to a closed subscriber group CSG list of the target LPN but can access the LPN.

25. The base station according to claim 24, wherein the second control unit is configured to determine to-be-pushed user equipment from a master access list MAL, wherein the to-be-pushed user equipment can access the target LPN; and
the base station further comprises:
a sending unit, configured to send a push message to the target LPN, wherein the push message comprises an identifier ID of the to-be-pushed user equipment.

26. The base station according to claim 24, wherein the base station further comprises:
a receiving unit, configured to receive an offload message sent by the target LPN, wherein the offload message comprises an identifier ID of to-be-offloaded user equipment; and
the second control unit is specifically configured to add the to-be-offloaded user equipment to a master access list MAL.
